# EUROPÄISCHE PATENTSCHRIFT

(11) **EP 0 896 784 B1**
(45) Veröffentlichungstag und Bekanntmachung des Hinweises auf die Patenterteilung: **19.01.2005**
(21) Anmeldenummer: 97922890.5
(22) Anmeldetag: 29.04.1997
(51) Int. Cl.: H04Q 11/04, H04L 12/56

(54) **VERFAHREN ZUM OPTIMIERTEN ÜBERTRAGEN VON ATM-ZELLEN ÜBER VERBINDUNGSABSCHNITTE**
PROCESS FOR OPTIMIZED TRANSMISSION OF ATM CELLS OVER CONNECTION ELEMENTS
PROCEDE DE TRANSMISSION OPTIMISEE DE CELLULES MTA PAR L'INTERMEDIAIRE D'ELEMENTS DE CONNEXION

(30) Priorität: 03.05.1996 DE 19617816
(43) Veröffentlichungstag der Anmeldung: 17.02.1999
(73) Patentinhaber: SIEMENS AKTIENGESELLSCHAFT, 80333 München (DE)
(72) Erfinder: WALLMEIER, Eugen, D-82223 Eichenau (DE)
(86) Internationale Anmeldenummer: PCT/DE1997/000872
(87) Internationale Veröffentlichungsnummer: WO 1997/042788

(56) Entgegenhaltungen:
- EP-A- 0 596 624
- EP-A- 0 710 046
- WALLMEIER E ET AL: "TRAFFIC CONTROL IN ATM SWITCHES WITH LARGE BUFFERS" 9TH ITC SPECIALISTS SEMINAR TELETRAFFIC MODELLING AND MEASUREMENT BROADBAND AND MOBILE COMMUNICATIONS, 7.November 1995, Seiten 45-60, XP000683145
- HEISS H ET AL: "PERFORMANCE DESIGN OF AN ATM NODE ON THE BASIS OF THE EXPERIENCE FROM THE BLNT RACE PROJECT" EUROPEAN TRANSACTIONS ON TELECOMMUNICATIONS AND RELATED TECHNOLOGIES, Bd. 5, Nr. 2, 1.März 1994, Seiten 199-206, XP000453461
- HLUCHYJ M G ET AL: "QUEUEING DISCIPLINES FOR INTEGRATED FAST PACKET NETWORKS" DISCOVERING A NEW WORLD OF COMMUNICATIONS, CHICAGO, JUNE 14 - 18, 1992, Bd. 2 OF 4, 14.Juni 1992, INSTITUTE OF ELECTRICAL AND ELECTRONICS ENGINEERS, Seiten 990-996, XP000326820

## Beschreibung

Die Erfindung betrifft ein Verfahren gemäß dem Oberbegriff des Patentanspruchs 1.

Bei zeitgemäßen ATM-Systemen werden Informationen in Zellen übertragen. Diese weisen einen Kopfteil sowie einen Informationsteil auf. Im Kopfteil sind die Verbindungsinformationen und im Informationsteil die zu übertragenden Nutzdaten abgespeichert. Die eigentliche Übertragung erfolgt in der Regel über Verbindungsabschnitte zwischen Sender und Empfänger. Dabei besteht gegebenenfalls das Erfordernis, die Verbindungsabschnitte derart auszunutzen, daß eine Mehrzahl von Sendeeinrichtungen die von diesen ausgehenden Zellenströme über denselben Verbindungsabschnitt übertragen.

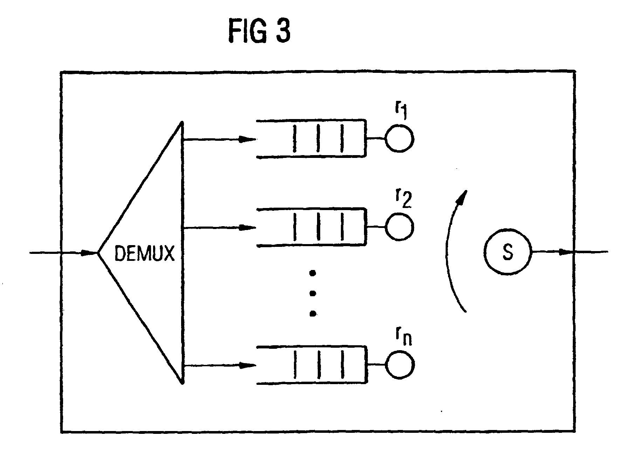

Um die Übertragung der jeweiligen Zellenströme entsprechend den Erfordernissen der einzelnen Zellenströme durchführen zu können, haben sich beim Stand der Technik sogenannte Scheduling-Verfahren durchgesetzt. Dabei werden die ATM-Zellen in einer bestimmten Reihenfolge aus den Pufferspeichern einer Schedulereinrichtung ausgelesen. Als Beispiel für ein derartiges Scheduling-Verfahren sei das WEIGHTED FAIR QUEUEING SCHEDULING - Verfahren erwähnt. Die entsprechenden Verhältnisse sind beispielsweise in der Druckschrift "Virtual Spacing for Flexible Traffic Control", J.W. Roberts, International Journal of Communication Systems, Vol. 7, 307-318 (1994) aufgezeigt. Dabei werden den einzelnen Zellenströmen unterschiedliche Gewichtungsfaktoren zugewiesen, mit denen der eigentliche Übertragungsvorgang auf den einzelnen Verbindungsabschnitten gesteuert wird. Zum besseren Verständnis sei auf Figur 3 verwiesen.

Dort sind beispielhaft Zellenströme 1 ... n offenbart. Die n Zellenströme werden von einer Sendeeinrichtung DEMUX in Richtung eines oder mehrerer Empfänger geleitet. In der Praxis wird dabei lediglich ein gemeinsamer Verbindungsabschnitt benutzt. Den n Zellenströmen sind weiterhin Gewichtungsfaktoren r₁ ... rₙ zugewiesen. Zum einfachen Verständnis sei angenommen, daß lediglich zwei Zellenströme,nämlich die Zellenströme 1, 2 über ein Verbindungsabschnitt geführt werden sollen. Der Verbindungsabschnitt soll weiterhin eine maximale Übertragungskapazität von 150 Mbit/sec aufweisen. Beiden Zellenströmen 1 und 2 sind Gewichtungen r₁ = 2 sowie r₂ = 1 zugewiesen. Damit wird erreicht, daß Zellenstrom 1 mit einer Übertragungsrate von 100 Mbit/sec und Zellenstrom 2 mit lediglich 50 Mbit/sec übertragen wird, falls Zellen zur Übertragung anstehen.

Problematisch an einer derartigen Vorgehensweise ist, daß viele der Scheduling-Verfahren wie beispielsweise das soeben erläuterte WEIGHTED FAIR QUEUEING SCHEDULING - Verfahren keine Spitzenbitratenbegrenzung auf den nachfolgenden Verbindungsabschnitten sicherstellen können. Um einer möglichen Überlastung vorzubeugen, werden dann ATM-Zellen verworfen. Obwohl dies ist im Einzelfall durchaus tolerierbar ist (z. B. Telefonie), sollte eine derartige Vorgehensweise vermieden werden, da hiermit immer ein Verlust an Daten verbunden ist.

Aus der Druckschrift 'Traffic Control in ATM Switches with Large Buffers', E. Wallmeier et al, 9^{th} ITC Specialist Seminar Teletraffic Modelling and Measurement Broadband and Mobile Communications; 7.11.1995, Seiten 45 - 60 wird eine Methode beschrieben, wie ATM Zellen auf nachfolgende Verbindungsabschnitte gemultiplext werden. Um das Multiplexen effizient vollführen zu können, werden große Pufferspeicher verwendet, die für moderne Anlagen unwirtschaftlich sind.

Weiterhin ist der Druckschrift 'Performance Design of an ATM Node on the Basis of the Experience from the BLNT RACE Project', H.Heiss, E. Wallmeier et al European Transactions on Telecommunications and Related Technologies, Band 5, Nr. 2, 1.3.49, Seiten 199 - 206 ein Verfahren zum statistischen Multiplexen von ATM Zellen angegeben. Dabei wird insbesondere das bekannte Leaky Bucket Verfahren angesprochen, das Vorwärts-Rückwärts-Zähler zu Hilfe nimmt. Für eine effiziente Behandlung der ATM-Zellen ist dieses Verfahren nicht zu verwenden, da hier stets ATM-Zellen als Ergebnis dieser Methode zu verwerfen sind.

Weiterhin ist der europäischen Patentanmeldung EP 0 710 046 A2 eine Vorrichtung entnehmbar, in der ATM Zellen nachfolgenden Einrichtungen zugeführt werden. Wie dies im Detail aber durchgeführt werden soll, ist dieser Druckschrift nicht entnehmbar.

Der Erfindung liegt die Aufgabe zugrunde, einen Weg aufzuzeigen, wie die Zellraten an die Übertragungskapazität der Verbindungsabschnitte optimal angepaßt werden ohne dabei den Verlust von ATM-Zellen in Kauf nehmen zu müssen.

Die Erfindung wird, ausgehend von den im Oberbegriff des Patentanspruchs 1 angegebenen Merkmalen durch die Merkmale des kennzeichnenden Teils gelöst.

Vorteilhaft an der Erfindung ist insbesondere die Verwendung eines zweistufigen Verfahrens, das hintereinander zum Ablauf gelangt. Dabei werden im erstem Verfahrensschritt des zweistufigen Verfahrens die Schedulereinrichtungen ausgewählt, die ATM-Zellen als Warteschlangen in ihren Pufferspeichern aufgenommen haben. Im zweiten Verfahrensschritt wird dann einer dieser Pufferspeicher ausgewählt und wenigstens eine der ATM-Zellen ausgelesen und übertragen. Vorteilhaft daran ist insbeondere, daß durch den ersten Verfahrensschritt eine Spitzenbitratenbegrenzung eines ATM-Zellenstromes mit einer oder mehreren virtuellen Kanalnummern durchgeführt wird. Weiterhin ist dieser Verfahrensschritt unabhängig von den im zweiten Verfahrensschritt verwendeten Schedulingverfahren.

Weitere Ausgestaltungen der Erfindung sind in den Unteransprüchen angegeben.

Die Erfindung wird im folgenden anhand eines Ausführungsbeispiels näher erläutert.

Es zeigen:
- Figur 1: ein Vermittlungssystem, auf dem das erfindungsgemäße Verfahren zum Ablauf gelangen soll,
- Figur 2: eine spezielle Ausführungsform des erfindungsgemäßen Verfahrens,
- Figur 3: der Stand der Technik, von dem die Erfindung ausgeht.

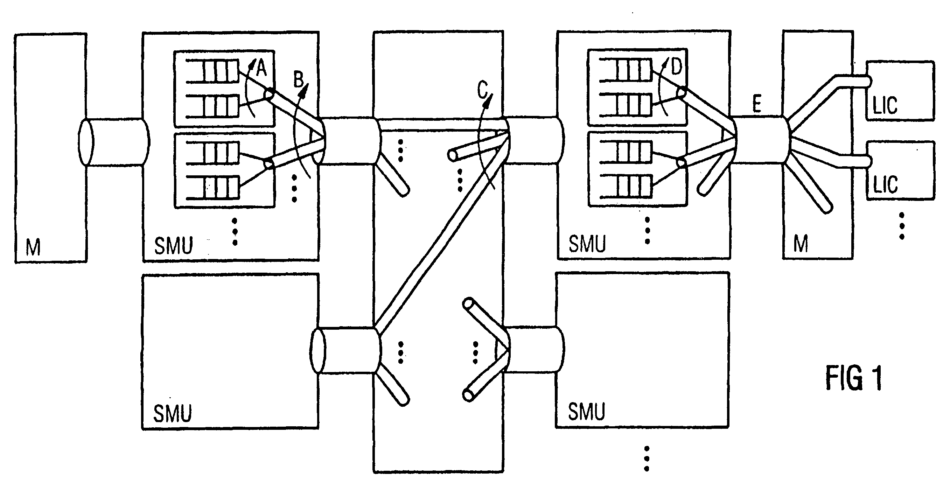

In Fig. 1 ist ein Vermittlungssystem aufgezeigt, auf dem das erfindungsgemäße Verfahren zum Ablauf gelangen soll. Hier sind jeweils eingangsseitig und ausgangsseitig Multiplexeinrichtungen M aufgezeigt, wobei die ausgangsseitigen Multiplexeinrichtungen M mit Schnittstellenanpassungseinheiten LIC verbunden sind. Weiterhin sind statistische Multiplexeinrichtungen SMU aufgezeigt, in denen Schedulingverfahren zum Ablauf gelangen. Diese Verfahren sind hier mit den Buchstaben A, B, C , D angedeutet. Weiterhin ist eine Übertragungsleitung E aufgezeigt, an die eingangsseitig über die statistische Multiplexeinrichtung SMU eine Mehrzahl von Schedule-Einrichtungen angeschlossen ist. Ausgangsseitig ist die Verbindungsleitung E mit der ausgangsseitigen Multiplexeinrichtung M an die Schnittstellenanpassungseinheiten LIC angeschlossen. Die Verbindungsleitung E sowie die Schnittstellenanpassungseinheiten LIC sind innerhalb des Vermittlungssystem im Hinblick auf die Übertragungskapazität als kritisch einzustufen. Ohne besondere Maßnahmen müßten ATM-Zellen verworfen werden, um die maximale Spitzenbitrate auf dem Übertragungsabschnitt E einhalten zu können.

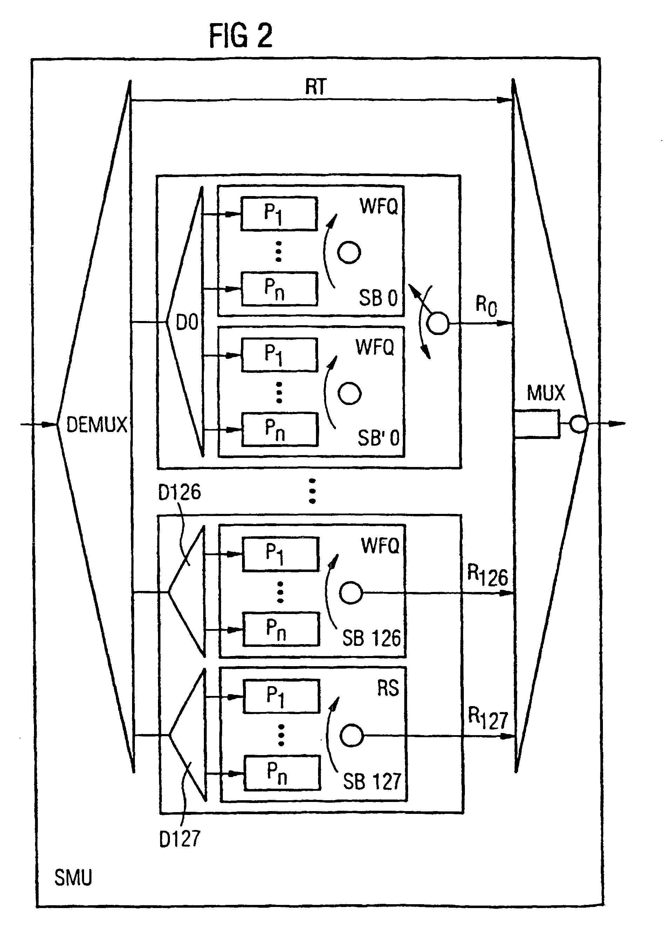

In Fig. 2 ist die statistische Multiplexeinrichtung SMU näher dargestellt, die in Fig. 1 an die ausgangsseitige Multiplexeinrichtung M herangeführt ist. Die über einen Verbindungsabschnitt ankommenden ATM-Zellen werden der Demultiplexeinrichtung DEMUX zugeführt. Diese verteilt die ATM-Zellen über weitere Demultiplexeinrichtungen D0...D127 verbindungsindividuell an Pufferspeicher P1...Pn der Schedulereinrichtungen SB0 ...SB127. Die Pufferspeicher sind dabei als FIFO-Speicher ausgebildet.

In vorliegendem Ausführungsbeispiel werden die ATM-Zellen nach einem bekannten Schedulingverfahren aus den Pufferspeichern ausgeelesen. In den Schedulereinrichtungen SB0.. SB126 soll das bekannte WEIGHTED FAIR QUEUEING SCHEDULING - Verfahren WFQ verwendet werden. Auch andere Verfahren sind jedoch möglich, beispielhaft sei hierzu die Schedulereinrichtung SB127 aufgezeigt. Hier wird ein modifiziertes WEIGHTED FAIR QUEUEING SCHEDULING - Verfahren RS (RATE SHAPING Verfahren) angewendet. Diese bekannten Verfahren bilden die zweite Stufe des zweistufigen Verfahrens. Sie sind ferner unabhängig von der ersten Stufe. Insofern kann hier jedes beliebige Schedulingverfahren zum Ablauf gelangen.

Bei der Verwendung des WEIGHTED FAIR QUEUEING SCHEDULING - Verfahren WFQ werden den Atm-Zellen wie eingangs beschrieben unterschiedliche Gewichtungsfaktoren r₁ zugewiesen. Mit Hilfe dieser Gewichtungsfaktoren werden die ATM-Zellen später in bekannter Weise ausgelesen und übertragen.

Die erste Stufe des zweistufigen erfindungsgemäßen Verfahrens gelangt auf der Multiplexeinrichtüng MUX zum Ablauf.Hier werden den einzelnen Schedulereinrichtungen SBO...SB127 Faktoren RO...R127 zugewiesen. Dabei handelt es sich um die Bitrate des Pfades bzw. der Verbindungsleitung, die von der entsprechenden Schedulereinrichtung gespeist wird. Der Faktor R ist weiterhin beliebig einstellbar. Dadurch läßt sich die Spitzenbitrate auf dem sich anschließenden Übertragungsabschnitt begrenzen, womit ein Verwerfen von ATM-Zellen unterbleibt.

Zunächst wird also eine der Schedulereinrichtungen SBO... SB127 gemäß der ersten Stufe des zweistufigen Verfahrens ausgewählt. Dies soll in vorliegendem Ausführungsbeispiel die Schedulereinrichtung SBO sein. Im folgenden wird dann durch den Ablauf der zweiten Stufe des zweistufigen Verfahrens der entsprechende Pufferspeicher P1..Pn ausgewählt. Dies sei beispielsweise der Pufferspeicher P1 der Schedulereinrichtung SBO. Die als erstes gespeicherte ATM-Zelle wird nun zur Multiplexeinrichtung MUX übertragen und den weiteren Einrichtungen zugeführt. Gemäß Fig. 1 sind dies der Übertragungsabschnitt E, der dort aufgezeigte ausgangsseitige Mulitplexer M sowie die Schnittstellenanpassungseinheiten LIC. Damit werden somit die ATM-Zellen nach WEIGHTED FAIR QUEUEING SCHED-ULING-Verfahrens WFQ auf den Multiplexer MUX geleitet (erste Stufe) , wo sie einer Begrenzung der Spitzenbitrate unterworfen werden (zweite Stufe). Dabei handelt es sich um die Begrenzung der Spitzenbitrate eines Stromes von ATM-Zellen, der in der Regel eine Mehrzahl von Verbindungen darstellt.

Dieser Mehrzahl wird durch eine Mehrzahl von virtuellen Kanalnummern (VCI) in einem virtuellen Pfad (VPI) Rechnung getragen. Insofern handelt es sich um die Spitzenbitrate der virtuellen Pfade.

In einer wseiteren Ausgestaltung der Erfindung werden die Schedulereinrichtungen gedoppelt ausgeführt. In vorliegendem Ausführungsbeispiel ist dies beispielhaft bei der Schedulereinrichtung SBO durch die parallel dazu angeordnete Scheduler-Einrichtung SB'O angedeutet.

In einer weiteren Ausgestaltung der Erfindung werden Real-Time ATM-Zellen RT der Multiplexeinrichtung MUX zugeführt. Dies sind ATM-Zellen, die im Zuge einer Online-Verbindung übertragen werden. Generell gilt, daß diese ATM-Zellen bevorzugt behandelt werden müssen, da sonst Echos auf den Leitungen entstehen. Beim erfindungsgemäßOen Verfahren wird diesen Real Time ATM-Zellen RT eine höhere Priorität zugewiesen. Dies bedeutet allerdings nicht, daß die ATM-Zellen in den Pufferspeichern P1...Pn solange nicht zum Multiplexer MUX übertragen werden können, solange die Real Time ATM-Zellen RT übertragen werden. Die Real Time ATM-Zellen RT werden ohne Begrenzung der Spitzenbitrate zur Multiplexeinrichtung MUX übertragen. Damit können die ATM-Zellen RT die in den Schedulereinrichtungen SBO...SB127 von der zweiten Stufe des zweistufigen Schedulingverfahrens zu behandelnden ATM-Zellen überholen.

## Patentansprüche

1. Verfahren zum Übertragen von ATM-Zellen über Verbindungsabschnitte, mit
Multiplexeinrichtungen (MUX) und/oder Demultiplexeinrichtungen (DEMUX, DO...D127) sowie zwischen diesen angeordneten Schedulereinrichtungen (SBO...SB127), die jeweils Pufferspeicher (P1...Pn) aufweisen, und mit
einem Strom von ATM-Zellen, dem eine Mehrzahl von virtuellen Kanalnummern sowie diese zusammenfassenden virtuelle Pfade zugeordnet ist,
**dadurch gekennzeichnet,**
- **daß** den Schedulereinrichtungen (SB0...SB127) beliebig einstellbare, für die Übertragungskapazität auf den nachfolgenden Verbindungsabschnitten repräsentative Gewichtungsfaktoren (r₁...rₙ) zugewiesen werden,
- **daß** in einem ersten Verfahrensschritt nach Maßgabe der zugewiesenen Gewichtungsfaktoren eine der Schedulereinrichtungen (SB0...SB127) ausgewählt wird, und
- **daß** in einem zweiten Verfahrensschritt mindestens eine der ATM-Zellen einem der Pufferspeicher der ausgewählten Schedulereinrichtung entnommen und weiteren Einrichtungen zugeführt wird.

2. Verfahren nach Anspruch 1,
**dadurch gekennzeichnet,**
**daß** die Entnahme der in den Pufferspeichern (P1...Pn) der Schedulereinrichtungen (SBO...SB127) gespeicherten ATM-Zellen durch das WEIGHTED FAIR QUEUEING SCHEDULING - Verfahren (WFQ) erfolgt.

3. Verfahren nach einem der vorstehenden Ansprüche,
**dadurch gekennzeichnet,**
**daß** über einen gesonderten, parallel zu den Schedulereinrichtungen (SBO...SB127) angeordneten Verbindungsabschnitt zusätzlich Real-Time, RT, ATM-Zellen dem Multiplexer (MUX) mit einer höheren Priorisierung zugeführt werden, als die über die Schedulereinrichtungen (SBO...SB127) übertragenen ATM-Zellen aufweisen.

4. Verfahren nach einem der vorstehenden Ansprüche,
**dadurch gekennzeichnet,**
**daß** die Pufferspeicher (P1...P127) als FIFO-Speicher ausgebildet sind.

## Claims

1. Method for transmitting ATM cells over connection elements, with multiplex facilities (MUX) and/or demultiplex facilities (DEMUX, D0...D127) and also scheduler facilities (SB0...SB127) located between these, which in each case have buffer memories (P1...Pn), and with
a flow of ATM cells to which a plurality of virtual channel numbers and also the virtual paths combining these is assigned,
**characterized in that**
- weighting factors (r₁...rₙ) which can be set as desired and which are representative of the transmission capacity on the following connection elements are assigned to the scheduler facilities (SB0...SB127),
- one of the scheduler facilities (SB0...SB127) is selected in a first method step according to the assigned weighting factors, and
- in a second method step at least one of the ATM cells is taken from one of the buffer memories in the selected scheduler facility and is routed to further facilities.

2. Method according to Claim 1,
**characterized in that**
the removal of the ATM cells stored in the buffer memories (P1...Pn) of the scheduler facilities (SB0...SB127) is carried out using the WEIGHTED FAIR QUEUEING SCHEDULING method (WFQ).

3. Method according to one of the preceding claims,
**characterized in that**
real-time, RT, ATM cells are additionally routed to the multiplexer (MUX) over a separate connection element arranged in parallel with the scheduler facilities (SB0... SB127) at a higher priority level than is exhibited by the ATM cells transmitted by way of the scheduler facilities (SB0...SB127) .

4. Method according to one of the preceding claims,
**characterized in that**
the buffer memories (P1...P127) are implemented as FIFO storages.

## Revendications

1. Procédé de transmission de cellules MTA par l'intermédiaire d'éléments de connexion, comprenant
des dispositifs de multiplexage (MUX) et/ou des dispositifs de démultiplexage (DEMUX, D0 ... D127) ainsi que des dispositifs d'ordonnancement (SB0 ... SB127) situés entre ceux-ci, lesquels comportent respectivement des mémoires tampons (P1 ... Pn) et
un flux de cellules MTA auquel sont affectés une pluralité de numéros de canaux virtuels ainsi que des chemins virtuels qui les réunissent,
**caractérisé en ce que**
- des facteurs de pondération (r₁ ... rₙ) réglables au choix et représentatifs de la capacité de transmission sur les éléments de connexion suivants sont attribués aux dispositifs d'ordonnancement (SB0 ... SB127),
- dans une première étape du procédé, l'un des dispositifs d'ordonnancement SB0 ... SB127 est sélectionné selon les facteurs de pondération attribués et
- dans une deuxième étape du procédé, au moins l'une des cellules MTA est retirée de l'une des mémoires tampons du dispositif d'ordonnancement sélectionné et amenée à d'autres dispositifs.

2. Procédé selon la revendication 1,
**caractérisé en ce que**
le retrait des cellules MTA enregistrées dans les mémoires tampons (P1 ... Pn) des dispositifs d'ordonnancement (SB0 ... SB127) se fait par le procédé «WEIGHTED FAIR QUEUEING SCHEDULING» (WFQ).

3. Procédé selon l'une des revendications précédentes,
**caractérisé en ce que**,
additionnellement, des cellules MTA temps réel RT sont amenées au multiplexeur (MUX) par l'intermédiaire d'un élément de connexion séparé, placé parallèlement par rapport aux dispositifs d'ordonnancement (SB0 ... SB127), avec une priorisation supérieure à celle que présentent les cellules MTA transmises par l'intermédiaire des dispositifs d'ordonnancement (SB0 ... SB 127).

4. Procédé selon l'une des revendications précédentes,
**caractérisé en ce que**
les mémoires tampons (P1 ... P127) sont configurées comme mémoires FIFO.
